# EUROPEAN PATENT APPLICATION

(11) **EP 0 883 019 A1**
(43) Date of publication of application: **09.12.1998**
(21) Application number: 97902720.8
(22) Date of filing: 18.02.1997
(51) Int. Cl.: G03B 17/53, G03B 15/12, H04N 7/18, H04N 5/225

(54) **SHOOTING APPARATUS**

(30) Priority: 02.09.1996 JP 8863/96 U; 10.09.1996 JP 89151/96 U
(71) Applicant: SNK CORPORATION, Suita-shi, Osaka 564-0053 (JP)
(72) Inventor: ISHIMOTO, Kouichi, Nara 631 (JP); KIMURA, Hiroaki, Osaka 564 (JP); FUJIMOTO, Kenta, Osaka-shi, Osaka 533 (JP); HORIGUCHI, Hamao, Osaka 581 (JP); MATSUMOTO, Shigekazu, Mino-shi, Osaka 562 (JP); HIRAOKA, Kazukuni, Mino-shi, Osaka 562 (JP)
(74) Representative: Leeming, John Gerard
(86) International application number: PCT/JP97/00430
(87) International publication number: WO 98/10331

(57) **Abstract**

The present invention comprises a body 1 containing an imaging means, a frame 5 whose end portions are rotatably attached to an upper end of a front of the body, a hood 8 disposed at above the frame with connected to the frame, a compressive/extendable support means having one end fixed to the hood and the other end attached to the top portion of the body for supporting the frame and the hood so that they are approximately parallel with each other, and since most of the stress applied to the frame becomes a force for extending a support means attached to the hood upwardly, the stress applied to the body is relaxed by the extension of the support means and not directly applied to the body, whereby the body is not likely to fall down, and thereby resulting in superior effects of preventing the body from falling down with relative to the prior art. The present invention also includes an image synthesizing device which comprises an imaging means for imaging a subject, a connecting means for detachably connecting an external storage unit storing plural pieces of synthesization component image data which are different from each other, a supplying means for supplying to an image synthesizing means the different pieces of synthesization component image data stored in the external storage unit connected to the connecting means, and the image synthesizing means for synthesizing the image data of the subject imaged by the imaging means with the image data supplied through the supplying means, whereby synthesization component images such as background images can be changed with ease and maintenance can be made easy.

## Description

### Technical Field

The present invention relates to an imaging device with an illuminator for illuminating a subject, and more specifically, an imaging device comprising a hood for reflecting a light from the illuminator as well as preventing entrance of light from the outside. The present invention also relates to an imaging device including an image synthesis device for synthesizing a subject and synthesization component images previously prepared such as background image, foreground image, and frame image, and outputting the result using a video printer or the like.

### Background Art

Generally, an outdoor type imaging device for taking images for certification can exclude influences by such as incident light from the outside by conducting imaging after a person entering inside a box-like space. An imaging device used as a game machine is arranged at such as game corner and is of a structure in which imaging a person is conducted in his standing state. Accordingly, for the purpose of preventing unnecessary backgrounds entering into the imaging regions or enhancing the illuminating effects, the imaging device is provided with a hanging screen having a configuration surrounding the upper body of a person.

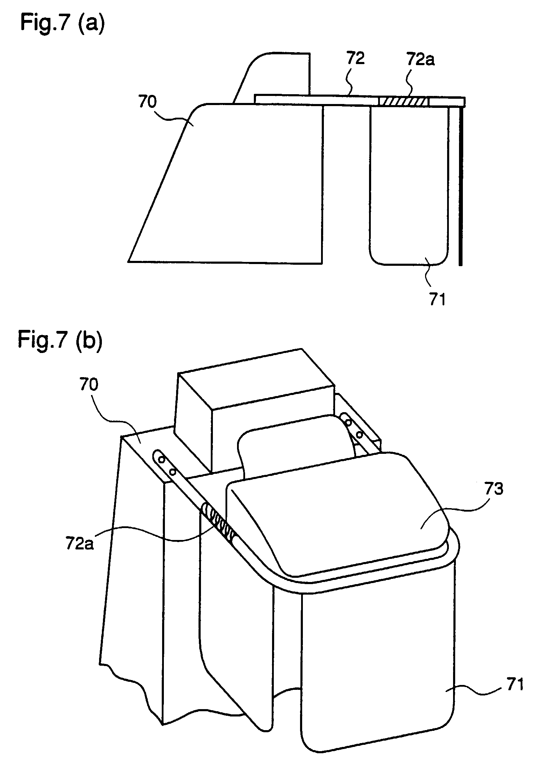

The box containing the imaging device generally has a configuration of elongated shape which is higher than a person in height, the provision of the above-described hanging screen or a hood (imaging supporting tool) with the body of such configuration would possibly make the body fall down. As a measure to solve this problem, there is a prior art in which opposite ends of an approximately U-shaped frame are attached to the top of the body 70, in which frame stress relaxing portions 72a comprising coil springs are attached in the way, as shown in figure 7(a). According to this configuration, even when the hanging screen 71 is pulled down by grasping it, the stress is converted into a force acting in an oblique direction with respect to the body 70 by the transformation of the stress relaxing portions 72a comprising coil springs, whereby it is prevented that the body 70 should fall down.

The imaging device including an image synthesizing device which is generally used as a game machine, contains several pieces of image data therein, as synthesization component images such as background image, foreground image, and frame image, and when among these pieces of data a desired one is selected and a person as a subject poses as he desires and imaging is started, a synthesized image in which the selected synthesization component image and the subject are synthesized by means of a CCD camera disposed behind a half mirror. Thus obtained synthesized image is processed by a built-in video printer unit, and a plurality of synthesized images are printed and output on a printing sheet.

By the way, in the above-described imaging device having the image synthesizing device, when image data to be such as background image is changed, a ROM storing the image data is generally changed. In this case, however, while changing the ROM mounted into a socket of a substrate, it is necessary to conduct operations with high caution so as to prevent influences by static electricity, entry of foreign substances and the like, and so as not to occur damages to the substrate, thereby causing a problem that the maintenance is difficult.

Further, as the synthesized images to be output, only a plurality of synthesized images having the same synthesized component image such as background image and a subject in the same pose are obtained. It was impossible to output a plurality of synthesized images with different synthesization component images.

In addition, while in imaging a user as a subject makes his pose in accordance with a synthesization component image such as background image, he is also required to conduct an operation such as pushing a button on the operation panel in order to start imaging, thereby causing blurs in the imaged object.

### Disclosure of the Invention

The conventional imaging device with a hood is configured as such and it was considerably useful in preventing the falling down of the body. However, the provision of only the hanging screen results in difficulty in enhancing the illumination and entrance of light from the outside reduces the illumination effects. Accordingly, development of further useful devices is desired. When in an imaging device configured as shown in figure 7(a), in order to further enhance the illumination effects, i.e., to prevent the incidence of light from above the body, an upper cover member 73 is attached to the frame 72 as shown in figure 7(b), a weight applied to the frame increases, thereby causing a problem that the effect of preventing falling down of the body 70 is reduced, and an upper portion nearer to the body 70 than the stress relaxation portions 72a cannot be sufficiently covered, causing a problem in that it is impossible to improve illumination effects sufficiently.

In addition, the conventional imaging device comprising an image synthesization device is thus configured and it is not possible to easily change a synthesization component image as such as background image, resulting in that the maintenance cannot be easily performed.

Further, there is a problem that the output synthesized images to be output comprise the same synthesization component image and a wide variety of synthesized images can not be provided.

Furthermore, there is a problem that the operation for starting imaging has to be conducted by the user, and therefore the imaged subject is blurred.

The present invention is, in view of the above, directed to providing an imaging device capable of obtaining sufficient illumination effects by using a hood covering the upper part of the body as well as efficient in preventing falling down of the body.

Further, the present invention is, in view of the above, directed to providing an imaging device including an image synthesization device which can easily change synthesization component images such as background images.

Furthermore, an object of the present invention is to provide an imaging device including an image synthesization device capable of outputting a wide variety of synthesized images.

Furthermore, an object of the present invention is to provide an imaging device including an image synthesizing device capable of conducting imaging without causing blurs.

According to claim 1 of the present invention, an imaging device comprises a body containing an imaging means, a frame whose end portions are rotatably attached to an upper end of a front of the body, a hood disposed at above the frame with connected to the frame, and a compressive/extendable support means having one end fixed to the hood and the other end attached to the top of the body for supporting the frame and the hood so that they are approximately parallel with each other.

According to claim 2 of the present invention, the imaging device as defined in claim 1 where there is provided an illuminating means for illuminating at least one of the side portions and the upper portion of the body.

According to claim 3 of the present invention, in the imaging device as defined in claim 1, the support means is a spring member supporting the frame and the hood so that they are approximately parallel with each other by urging the top hood toward the side of the top portion of the body.

According to claim 11 of the present invention, an imaging device includes an image synthesizing device which comprises an imaging means for imaging a subject, a connecting means for detachably connecting an external storage unit storing plural pieces of synthesization component image data which are different from each other, a supplying means for supplying to an image synthesizing means the different pieces of synthesization component image data stored in the external storage unit connected to the connecting means, and an image synthesizing means for synthesizing the image data imaged by the imaging means with the image data supplied through the supplying means.

According to claim 12 of the present invention, in the imaging device as defined in claim 11, an image synthesizing means comprises a first frame memory for storing the taken image data of the subject, an image selecting means for successively selecting plural pieces of image data of desired images, from plural pieces of synthesization component image data stored in the external storage unit, an image data synthesizer for synthesizing subject image data output from the first frame memory with synthesization component image data selected by the image selecting means to successively output synthesized image data, and a second frame memory for storing plural pieces of synthesized image data each for respective synthesization component images which are obtained by synthesization by means of the image data synthesizer, and the image synthesizing device printing a plurality of synthesized image data each for respective synthesization component images on one sheet, using the data stored in the second frame memory.

According to claim 13 of the present invention, the imaging device as defined in claim 12 includes an image synthesizing device which comprises an image data converting means for converting a color tone of the synthesized image data output from the image data synthesizer into monochrome.

According to claim 14 of the present invention, the imaging device as defined in claim 11 comprises an image synthesizing device which comprises an instruction means through which a user gives instruction to start imaging while conducting imaging by the imaging means, a text display means for displaying a text communicating a shutter timing in response to an operation by the instruction means, and a voice guiding means for outputting voice in synchronization with the texts displayed by the text display means.

Further, an imaging device according to claim 15 of the present invention includes an image synthesizing device which comprises an imaging means for imaging a subject, a connecting means for detachably connecting an external storage unit storing plural pieces of synthesization component image data which are different from each other, a selecting means for successively selecting and outputting the different pieces of synthesization component image data stored in the external storage unit connected to the connecting means, an image synthesizing means for successively synthesizing the image data of the subject taken by the imaging means with each of the different pieces of image data selected by the selecting means, and a printing means for printing plural different synthesized images on one sheet, based on different pieces of synthesized image data obtained by synthesization by means of the image synthesizing means.

### Brief Description of the Drawings

Figure 1 is a perspective view illustrating a structure of an imaging device provided with a hood according to a first embodiment of the present invention.

Figure 2 is a partially cross-sectional perspective view illustrating the structure of the imaging device provided with a hood according to the first embodiment.

Figure 3 is a side sectional view illustrating whole structures of the imaging device comprising a hood according to the first embodiment and an image synthesization device according to a third embodiment.

Figure 4 is a partially side view for explaining operations of the imaging device provided with a hood according to the first embodiment.

Figure 5 is a partially side view illustrating a structure of an imaging device provided with a hood according to a second embodiment of the present invention.

Figure 6 is a partially sectional view illustrating a structure of the imaging device provided with a hood according to the first embodiment which has a weight at the rear end of the hood.

Figures 7 are partial perspective views illustrating a structure of a conventional imaging device provided with a hood.

Figure 8 is a view illustrating a detailed structure of a substrate unit of the image synthesizing device according to the third embodiment.

Figure 9 is a block diagram illustrating a structure with a substrate unit as its center, of an image synthesizing device according to a fourth embodiment of the present invention.

Figures 10 are diagrams for explaining the operation of the substrate unit of the image synthesizing device according to the fourth embodiment.

Figure 11 is a block diagram illustrating a structure with a substrate unit as its center, of an image synthesizing device according to a fifth embodiment of the present invention.

Figures 12 are diagrams illustrating layouts of a sheet output by means of the image synthesizing device of the fifth embodiment.

Figure 13 is a diagram illustrating a structure with the imaging window as its center, of an image synthesizing device according to a sixth embodiment of the present invention.

### Best Mode for Carrying Out the Invention

### Embodiment 1.

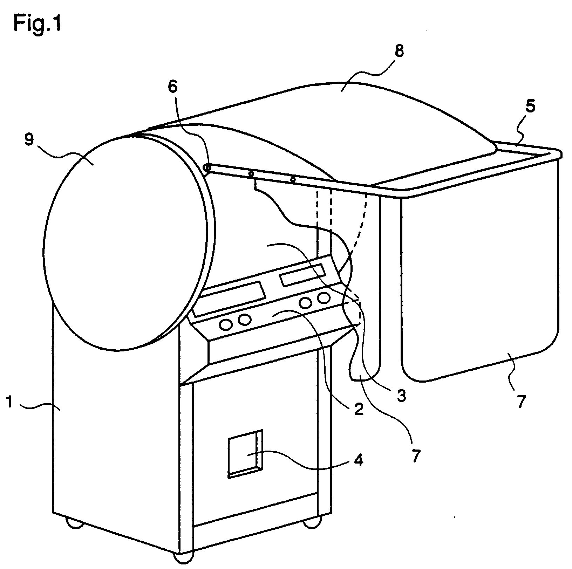

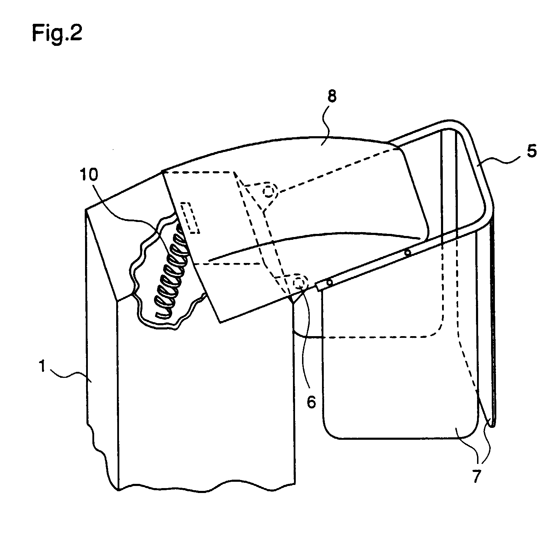

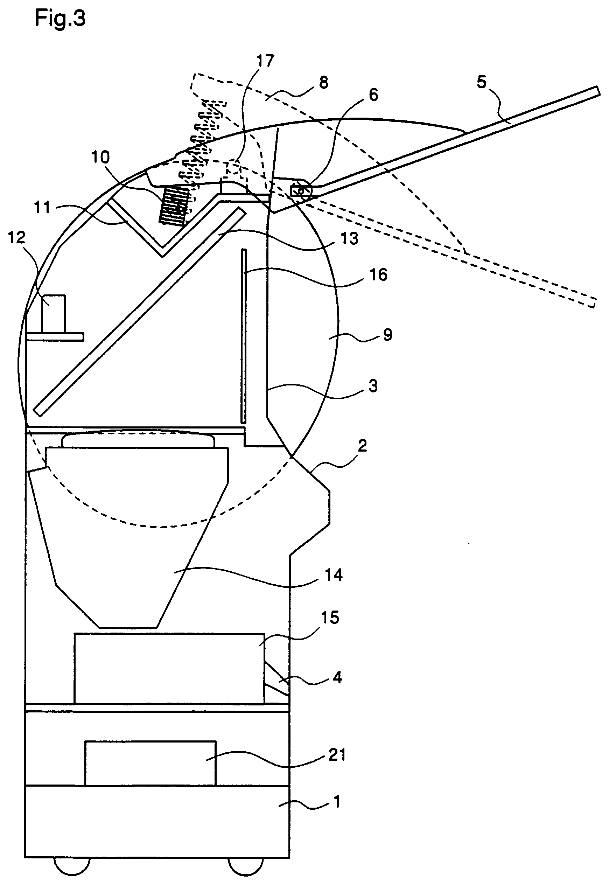

A description is given of an imaging device provided with a hood according to a first embodiment of the present invention. Figure 1 is a perspective view illustrating a structure of an imaging device provided with a hood according to the first embodiment, figure 2 is a partially cross-sectional perspective view thereof, and figure 3 is a side sectional view thereof, respectively. In figure 1, reference numeral 1 designates a body of 620 cm width, 580 cm length, and 185 cm height. An operation panel 2 for operating imaging equipment contained in the body 1 is provided at the center of a front of the body, an imaging window 3 for conducting imaging is provided at an upper portion thereof, and an outlet 4 for taking out a sheet in which imaged video is printed on such as a paper is provided below the operation panel 2. Further, above the front of the body 1, an approximately U-shaped frame 5 made of steel or the like and whose both ends are rotatable with a support axis 6 as its center, is provided as a holding means for holding a hood (light reflecting means) which will be described later, and three hanging screens 7 are attached to the frame 5 such that the front of the body 1 is surrounded from three sides. In addition, a hood 8 having a shape that covers a region ranging from a part of the top of the body 1 to a portion of the frame 5 and portions of the both sides of the body 1 is also attached to the frame 5 with its front end portion fixed. Furthermore, a substrate unit 21 for performing image synthesization processing is contained in the lower part of the body 1. Reference numeral 9 designates an oval-shaped side cover attached to the side of the body 1 which is used as a face plate.

In figure 3, reference numeral 10 designates a coil spring as a support means having one end fixed to the hood 8 and the opposite end attached to a light shielding plate member 11 attached to the vicinity of the top of the body 1, and this normally urges the hood 8 toward the body 1 so that the hood 8 becomes approximately parallel with each other. Reference numeral 12 designates a CCD camera for imaging disposed at the rear of the body 1 facing the imaging window 3 disposed at the front of the body 1. Numeral 13 designates a half mirror disposed in a space between the imaging window 3 and the CCD camera 12. Numeral 14 designates a CRT disposed with its screen directed facing with the top of the body 1, and the half mirror 13 and the CRT 14 constitute a monitoring means. Numeral 15 designates a video printer unit for printing an image after imaging on a sheet such as a paper and sending it out to the outlet 4. Numeral 16 designates an illuminator such as a fluorescent light disposed inside the imaging window 3. Numeral 17 designates an illuminator such as a fluorescent light attached to the top of the light shielding plate member 11 so that its irradiated light projects the inner surface of the hood 8 and is reflected thereby. This hood 8 is made of white acrylic to obtain high reflection efficiency against illuminating light.

Next, a description is given of the operation of the imaging device having the above-described structure.

First of all, at the time of imaging, a person stands in front of the imaging window 3, and the operation panel 2 is operated after selecting a desired background among backgrounds which are output from the CRT 14 and displayed on the half mirror 13, thereby conducting imaging. More specifically, video data of a person imaged by the CCD camera 12 through the imaging window 3 and the half mirror 13 and the image data of the selected background are subjected to image synthesization processing through the substrate unit 21. At this time, the upper portion of the imaging window 3 is covered by the hood 8, and light irradiated by the illuminator 17 such as a fluorescent light attached to the top of the light shielding plate member 11 at an upper part of the body 1 is reflected by the inner surface of the hood 8, thereby to illuminate the person positioning therebelow, whereby influences by such as light from the outside are excluded, improving the illumination effects. The imaged video is printed out on a sheet such as paper in the video printer unit 15 and sent out to the outlet 4.

Next, operations when stresses are applied to the hood 8 and the hanging screens 7 will be described.

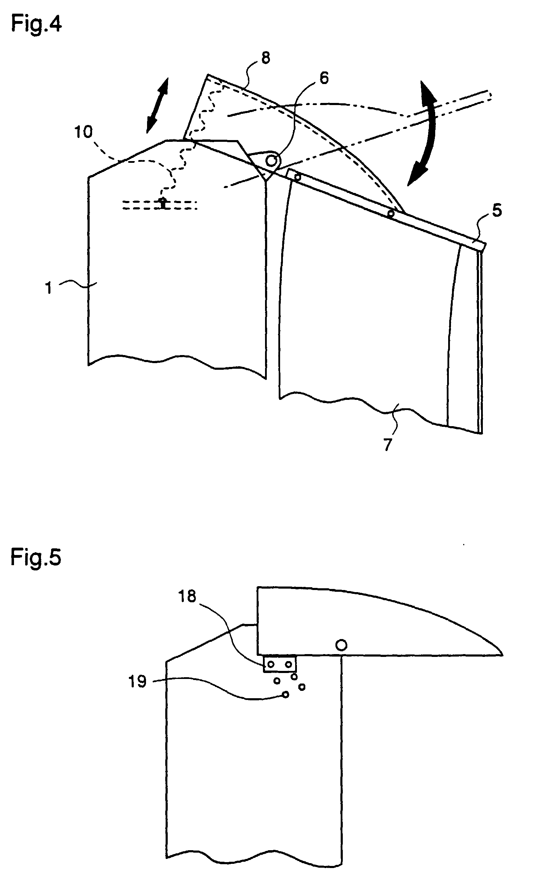

In a case where stresses which are directed downward are applied to the hood 8 or the hanging screens 7, when the stress becomes larger than a urging force of the coil spring 10, the frame 5 rotates with the support axis 6 as its center, and the hood 8 and the hanging screens 7 are both inclined together with the frame 5, as shown in figure 4. At this time, the stress acted on the frame 5 serves to provide a function of a lever operating with the support axis 6 as " fulcrum " and the coil spring 10 as "action point", in which the position of the action point is in the top part of the body. On the contrary, in the conventional structure shown in figures 7, the stress having acted on the stress relaxing portions 72a changes its direction to an oblique downward direction and acts on the top of the body 70 as a part to which the frame 72 is attached. On the contrary, in the structure according to the first embodiment, due to the rotation of the attachment parts of the frame 5 with the support axis 6 as its center, most of the applied stress acts as a force for extending the coil spring 10 connected to the hood 8 upwardly and the stress applied to the body 1 is relaxed by the extension of the coil spring 10 and not directly applied to the body 1, thereby reducing the possibility of falling down of the body.

As described above, according to the first embodiment, the both end portions of the approximately U-shaped frame 5 are attached to the upper end of the front of the body 1 rotatable with the support axis 6 as its center, the hood 8 is arranged joined to the frame 5 at a position over the frame 5, one end of the coil spring 10 is attached to the rear end of the hood 8 and the other end thereof is attached to the top of the light shielding plate member 11 at an upper portion of the body 1 so as to support the frame 5 and the hood 8 so that they become approximately parallel with each other: Therefore, even when stress is applied to the frame 5, the frame 5 rotates at its attachment portion with the support axis 6 as its center, and most of the applied stresses becomes a force for extending the coil spring 10 attached to the hood 8 upwardly, the stress applied to the body 1 is relaxed by the extension of the coil spring 10 and not directly applied to the body 1, whereby the body is not likely to fall down, thereby resulting in superior effects with relative to the prior art.

Furthermore, since it is structured that a space above the imaging window 3 is covered by the hood 8 and the light irradiated from the illuminator 17 toward the inside of the hood 8 is reflected by the inner surface of the hood 8 so as to illuminate a person positioned therebelow. Thereby, such as influences by light from the outside intruding from the top of the body 1 can be excluded, thereby obtaining high illumination effects.

While in the first embodiment a coil spring 10 is provided, a plurality of coil springs may be employed. The constant of the coil spring may be set as required depending on parameters such as the length of the frame 5 and the weight of the hood 8. As preferred, the constant may be set at such a value that it starts extension when a weight of about 5kg is applied to the front of the frame 5.

Further, while the illuminators 16 and 17 are provided at sides and top of the front of the body, respectively, it may be provided at any of the both.

### Embodiment 2.

Next, a description is given of an imaging device provided with a hood according to a second embodiment. Figure 5 is a partially side view illustrating a structure of an imaging device provided with a hood according to the second embodiment. In figure 5, reference numeral 18 designates a stopper attached to the vicinity of upper portions of both sides of the body 1. By that the stopper 18 abuts with the bottom of the hood 8, the position of the hood 8 when it is urged by the coil spring 10 is determined.

A plurality of fitting holes 19 for fitting the stoppers 18 are provided at the sides of the body 1, and the position of the hood 8 when urged can be changed according to the hole 19 which is used.

As described above, according to the second embodiment, the stoppers 18 abutting the bottom of the hood 8 are provided at the sides of the body 1, and by changing the fitting positions of the stoppers 18, the position of the hood 8 when urged is made adjustable. Therefore, the inclination of the hood 8 can be changed to some extent depending on circumferential conditions for disposing the imaging device.

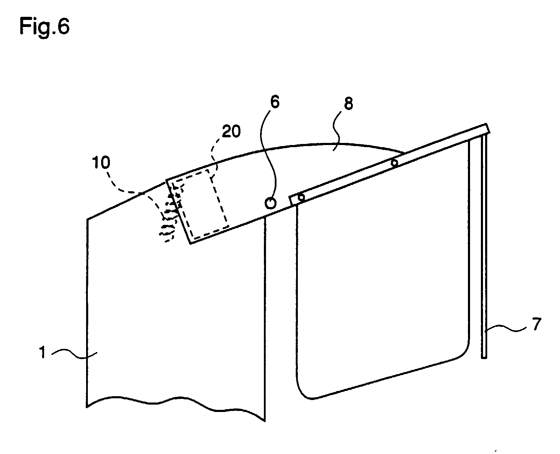

While in the first embodiment the constant(s) and the number of coil springs to be used are adjusted to take a balance with the stress applied, the weight 20 may be provided by adhering a sheet of a metal having a relatively heavy specific gravity, such as lead, along the inner surface of the rear end of the hood 8, as shown in figure 6. By adjusting the weight of this weight 20, a still greater stress is required as a stress for the hood 8 to start rotation with the support axis 6 as its center. In other words, the same effect can be obtained as in a case where a strong coil spring is employed in the first embodiment.

### Embodiment 3.

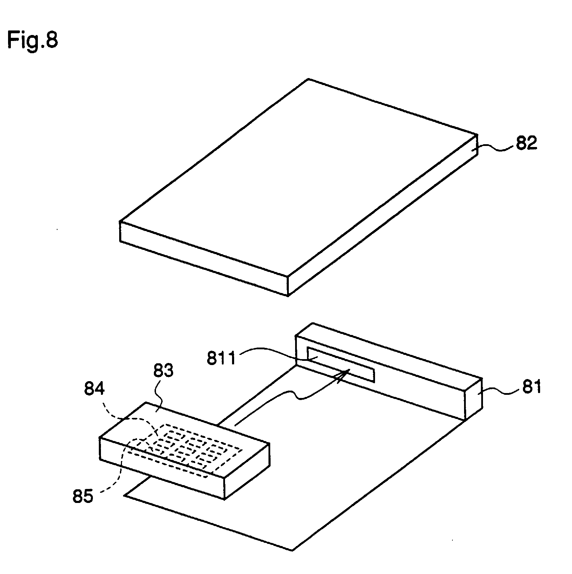

A description is given of an image synthesizing device of an imaging device according to a third embodiment of the present invention. Figure 8 is a diagram illustrating a detailed structure of a substrate unit 21 contained in the body 1. In the figure, numeral 81 designates a body substrate. Numeral 82 designates a cover for covering the body substrate 81. Numeral 83 designates a cassette as an external storage unit containing a ROM substrate 84. Numeral 85 designates a plurality of ROMs mounted on the ROM substrate 84. Numeral 811 designates a connector for electrically connecting the cassette 83 and the body substrate 81, and the cassette 83 is mounted onto the body substrate 81 detachably by the connector 811.

First of all, a description is given of operations for changing the background image at the imaging.

Initially, a cassette 83 having a ROM substrate 85 of a kind, that is different from that of a cassette currently mounted is prepared, a cover 82 of a substrate unit 21 is removed to expose the cassette 83, and this currently mounted cassette 83 is removed from the body substrate 81. Then, the other cassette 83 is mounted to the connector 811 and the cover 82 is put thereon.

By the above-described operation, the ROMs storing background images can be easily changed using the cassettes 83.

Further, while the number of background images can be increased by increasing the number of ROMs 84 mounted on the ROM substrate 85, the above-described structure enables easily increasing the kinds of background images by only changing the cassette 83.

As described above, according to the third embodiment, because ROMs storing background images are contained in the cassette 83 and the cassette 83 is to be changed, it is more unlikely to be subjected to influences by such as static electricity or damages to the substrate as compared with the conventional method in which ROMs mounted into sockets of a substrate are directly changed, whereby background images can be replaced with ease, the handling becomes easier, and the maintenance of the device can be made easy.

### Embodiment 4.

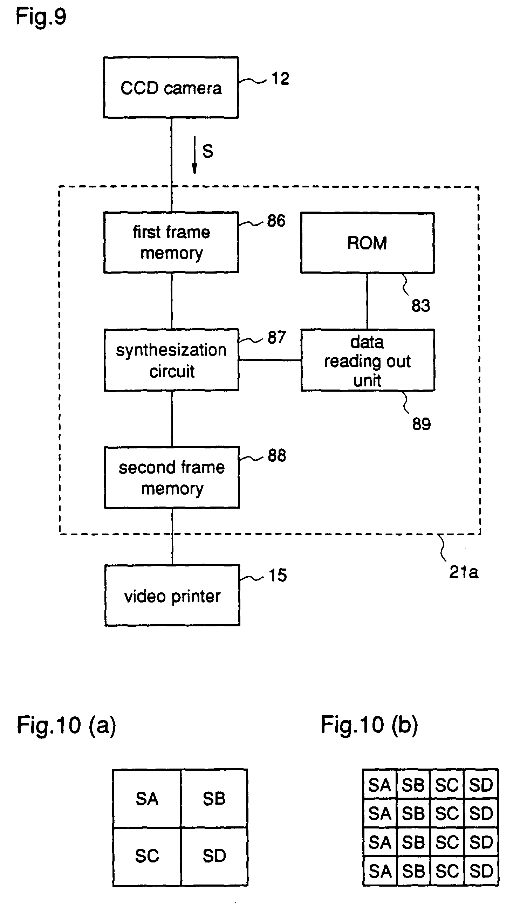

A description is given of an image synthesizing device of an imaging device according to a fourth embodiment. Figure 9 is a block diagram illustrating a structure with a substrate unit 21a as its center, of the image synthesizing device according to the fourth embodiment. In figure 9, reference numeral 21a designates a substrate unit to which image data S imaged by a CCD camera 12 is input. Numeral 86 designates a first frame memory for storing the image data S of a subject sent from the CCD camera 12. Numeral 87 designates a synthesization circuit as an image data synthesizer for synthesizing the image data of the subject sent from the first frame memory 86 with background image data sent from a cassette 83. Numeral 88 designates a second frame memory for taking in the synthesized image data output from the synthesization circuit 87 with reducing the size of the same into one quarter thereof. Numeral 89 designates a data reading out unit for selecting and reading out one of the background image data which are stored in the cassette 83.

Next, a description is given of the operation.

Initially, image data S of a subject (in most cases, a person) imaged by the CCD camera 12 is taken in into the first frame memory 86 at a following stage. Then, it is output to the synthesization circuit 87 at a subsequent stage and it is synthesized with the background image data A stored in the cassette 83. The background image data A is one of the data previously selected by a user, and read out by the data reading unit 89. Then, the synthesized image data SA obtained by synmthesization is stored in a predetermined address in the second frame memory 88 at a following stage with its size reduced to one fourth thereof.

Next, the data reading unit 89 reads out the next background image data B and outputs the same to the synthesization circuit 87. Then, it is synthesized with the image data S of the subject sent from the first frame memory 86 and it is sent to the second frame memory 88 at a following stage with its size being reduced, and it is stored therein. As for the background image data C and D, the same processing are successively conducted, and four kinds of synthesized image data SA_{∼}SD are stored in the second frame memory 88 in a state as shown in figure 10(a).

Next, printing out is carried out in the video printer 15 so as to obtain a layout as shown in figure 10(b), using the four kinds of synthesized image data SA_{∼}SD stored in the second frame memory 88.

As described above, according to the fourth embodiment, the image data S of a subject imaged by the CCD camera 12 and the plurality of background image data A_{∼}D read out from the cassette 83 are processed by means of the frame memories 86 and 88 and the synthesization circuit 87, whereby a wide variety of synthesized images can be provided.

While in the fourth embodiment a case where a printing result having a layout of four rows and four columns having arranged on a sheet is described, any numbers of background images and printing sheets other than above may be employed. It is also possible to obtain a printed sheet on which a plurality of synthesized images all having different background images respectively are printed.

Furthermore, the reading out order of the background image data A, B, C, and D may be changed.

### Embodiment 5.

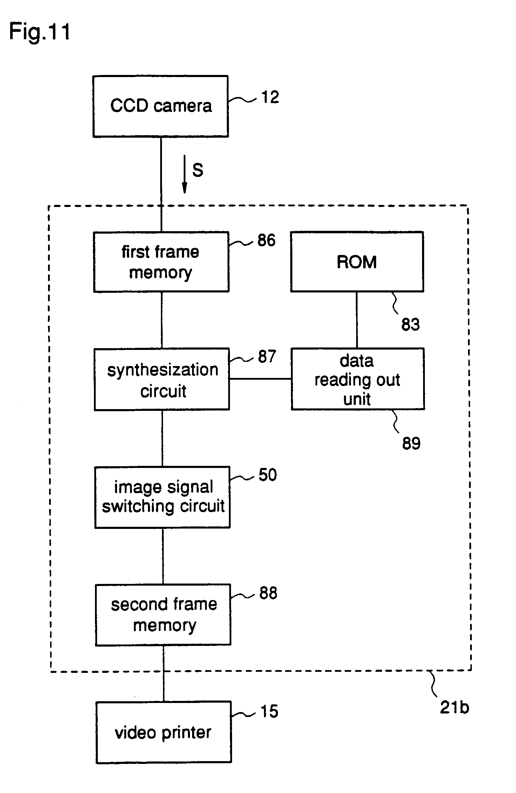

A description is given of an image synthesizing device of an imaging device according to a fifth embodiment. Figure 11 is a block diagram illustrating a structure with a substrate unit 21b as its center, of the image synthesizing device according to the fifth embodiment. In figure 11, numeral 21b designates a substrate unit to which image data S imaged by the CCD camera 12 is input. The difference from the substrate unit 21a shown in the fourth embodiment is that an image signal switching circuit 50 is provided at a following stage of the synthesization circuit 87. This image signal switching circuit has a function of converting synthesized image data output from the synthesization circuit (normally color data) to monochromatic data by, for example, only outputting brightness signals, and thus it is designed that color mode and the monochromatic mode can be switched.

Next, a description is given of the operation. Here, a description is only given of the operation where the monochromatic mode is designated as the synthesized image data output from the video printer 15 since the same result as in the fourth embodiment is obtained when the color mode is designated as the synthesized image data output from the video printer 15, by that the synthesized image data output from the synthesization circuit 87 passes through the image signal switching circuit 50 at a following stage to be stored into the second frame memory 88.

Similar as in the fourth embodiment, image data S of a subject imaged by a CCD camera 12 is taken in into the first frame 86 at a following stage, output to the synthesization circuit 87, and it is synthesized with the background image data A stored in the cassette 83. The synthesized image data SA obtained by synthesization is, after converted from color data to monochromatic data in the image signal switching circuit 50, stored in a prescribed address in the second frame memory 88 at a following stage with its size reduced to one fourth thereof.

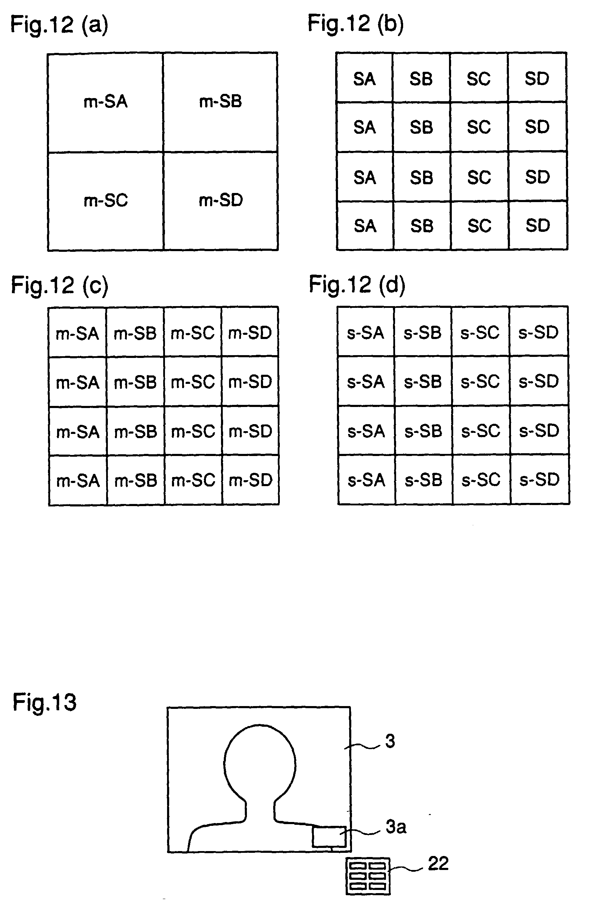

Next, as for background image data B, C, and D, the same processing are successively conducted and four kinds of monochromatic synthesized image data m-SA_{∼}m-SD are stored in the second frame memory 88 as shown in figure 12(a).

Then, printing out is carried out so as to obtain a layout as shown in figure 12(c), using the four kinds of monochromatic synthesized image data m-SA_{∼}m-SD stored in the second frame memory 88. In a case where printing out in sepia is to be carried out, it is realized by applying image processing to the synthesized image data in monochromatic mode stored in the second frame memory 88.

By conducting the above-described processing, it is possible to print out sheets which have layouts stained in color, monochromatic, and sepia as shown in figures 12(b), 12(c), and 12(d), respectively.

As described above, according to the fifth embodiment, image data S of a subject imaged by the CCD camera 12 and the plurality of background image data A_{∼}D read out from the cassette 83 are processed by means of the frame memories 86 and 88 and the synthesization circuit 87, and simultaneously the synthesized image data synthesized in the synthesization circuit 87 is converted into monochromatic mode by the image signal switching circuit 50, whereby a wider variety of synthesized images can be provided.

### Embodiment 6.

A description is given of an image synthesizing device of an imaging device according to a sixth embodiment. Figure 13 is a diagram illustrating a structure with the imaging window 3 as its center, of the image synthesizing device according to the sixth embodiment. In the figure, numeral 3a designates a text display window provided in a lower right corner of the imaging window 3, and the texts which are displayed here will not be displayed when printed. Further, numeral 22 designates a speaker for outputting voices not only for explaining such as a procedure at the imaging, but for performing guiding at the imaging in synchronization with the text display window.

Next, a description is given of the operation.

There has been already a structure in which a procedure for selecting a background image at imaging or an imaging starting procedure for imaging a subject is guided by voice. Actually, however, after the start of imaging, the shutter operates after a predetermined time, or operations such as pushing a button by extending a hand onto an operation panel have to be carried out, thereby a user's eyes may be averted from the screen or blurs may occur. In the sixth embodiment, after pushing an imaging start button (not shown) as an instruction means provided on the operation panel 2, it is guided by text and voice that preparation for imaging is completed, and subsequently a countdown for the imaging is conducted by text and voice.

As described above, according to the sixth embodiment, since even after it is set to the imaging mode, guides are provided by the text display window 3a displayed in the corner of the imaging window 3 and the speaker 22 as required, a user as a subject can always keep his eyes on the imaging window 3, and imaging under a condition similar to a case where there is a cameraman can be conducted. Thereby, blurs of the imaging are unlikely to occur and a synthesized image of a desired composition can be obtained with ease.

While in the above-described respective embodiments the background images are used as synthesization component images, foreground images or frame images may be used in place of the background images with the same effects.

Thus, an imaging device provided with a hood according to the present invention comprises a body containing an imaging means, a frame whose end portions are rotatably attached to an upper end of a front of the body, a hood disposed at above the frame with connected to the frame, a compressive/extendable support means having one end fixed to the hood and the other end attached to the top of the body for supporting the frame and the hood so that they are approximately parallel with each other, thereby since most of the stress applied to the frame serves as a force for extending a support means attached to the hood upwardly, the stress applied to the body is relaxed by the extension of the support means and not directly applied to the body, whereby the body is not likely to fall down, thereby resulting in superior effects of preventing falling down with relative to the prior art.

Further, the imaging device provided with a hood is provided with an illuminating means for illuminating at least one of the side portions and the upper portion of the body, and since the light irradiated to the inside of the hood by the illuminator is reflected by the inner surface of the hood to illuminate the person positioning therebelow, whereby influences by such as light from the upper part of the body are excluded, thereby improving the illumination effects.

In the imaging device provided with a hood, a spring member is used as the support means, whereby the device can be manufactured at low cost.

Further, an imaging device according to claim 11 of the present invention includes an image synthesizing device which comprises an imaging means for imaging a subject, a connecting means for detachably connecting an external storage unit storing plural pieces of synthesization component image data which are different from each other, a supplying means for supplying to an image synthesizing means the different pieces of synthesization component image data stored in the external storage unit connected to the connecting means, and the image synthesizing means for synthesizing the subject image data imaged by the imaging means with the image data supplied through the supplying means, whereby synthesization component images such as background images can be replaced with ease and the maintenance can be made easy.

Furthermore, according to claim 12 of the present invention, the imaging device described in claim 11 includes an image synthesizing device wherein the image synthesizing means comprises a first frame memory for storing the taken image data of the subject, an image selecting means for successively selecting plural pieces of image data of desired images from plural different pieces of synthesization component image data stored in the external storage unit, an image data synthesizer for synthesizing image data of the subject output from the first frame memory with synthesization component image data selected by the image selecting means to successively output synthesized image data, and a second frame memory for storing plural pieces of synthesized image data each for respective synthesization component images which are obtained by synthesization by means of the image data synthesizer, and the synthesizing device printing a plurality of synthesized image data each for respective synthesization component images on one sheet, using the data stored in the second frame memory, whereby a wide variety of synthesized images can be provided.

According to claim 13 of the present invention, the imaging device described in claim 12 includes an image synthesizing device which comprises an image data converting means for converting a color tone of the synthesized image data output from the image data synthesizer to monochromatic, whereby a wide variety of synthesized images can be provided.

According to claim 14 of the present invention, the imaging device described in claim 11 includes an image synthesizing device which comprises an instruction means through which a user gives an instruction to start imaging while conducting imaging by the imaging means, a text display means for displaying a text communicating a shutter timing in response to an operation by the instruction means, and a voice guiding means for outputting a voice in synchronization with the text displayed by the text display means, whereby imaging without blurs can be carried out.

Further, an imaging device according to claim 15 of the present invention includes an image synthesizing device which comprises an imaging means for imaging a subject, a connecting means for detachably connecting an external storage unit storing plural pieces of synthesization component image data which are different from each other, a selecting means for successively selecting and outputting the different pieces of synthesization component image data stored in the external storage unit connected to the connecting means, an image synthesizing means for successively synthesizing the image data of the subject taken by the imaging means with each of the different pieces of synthesization component image data selected by the selecting means, and a printing means for printing plural different synthesized images on one sheet, based on plural different pieces of synthesized image data obtained by synthesization by means of the image synthesizing means, whereby a wider variety of composite images can be provided.

## Claims

1. An imaging device comprising:
a body containing an imaging means:
a frame whose end portions are rotatably attached to an upper end of a front of the body;
a hood disposed at above the frame with connected to the frame; and
a compressive/extendable support means having one end fixed to the hood and the other end attached to the top of the body for supporting the frame and the hood so that the are approximately parallel with each other.

2. The imaging device as defined in claim 1 where there is provided an illuminating means for illuminating at least one of the side portions and the upper portion of the body.

3. The imaging device as defined in claim 1 wherein the support means is a spring member supporting the frame and the hood so that they are approximately parallel with each other by urging the top hood toward the side of the top portion of the body.

4. The imaging device as defined in claim 1 wherein the frame is of approximately U-shaped.

5. The imaging device as defined in claim 1 wherein a weight is provided at an end of the hood closed to the body.

6. The imaging device as defined in claim 1 wherein there is provided a stopper for regulating the rotation angle of the frame.

7. The imaging device as defined in claim 1 wherein the hood is made of acrylic.

8. An imaging device comprising:
a body containing an imaging means;
a monitoring means disposed within the body and displaying an image of a subject;
an illuminating means for illuminating the subject; and
a light reflecting means having at an inner surface thereof a light reflection part for reflecting a light from the illuminating means.

9. The imaging device as defined in claim 8 wherein the illuminating means is disposed at at least one of the side portions and the upper portion of the front of the body.

10. An imaging device comprising:
a body containing an imaging means;
a monitoring means disposed within the body and displaying an image of a subject;
an illuminating means for illuminating the subject;
a light reflecting means having at an inner surface thereof a light reflecting part for reflecting a light from the illuminating means and extending downwardly in a direction from the top to the front of the body;
a holding means disposed on the body for holding the light reflecting means; and
a compressive/extendable support means having one end fixed to the light reflecting means and the other end attached to the body for supporting the light reflecting means and the holding means so that they are approximately parallel with each other so as to rotate the light reflecting means and the holding means by extending itself when a stress larger than a prescribed strength is applied from the outside.

11. An imaging device including an image synthesizing device which comprises:
an imaging means for imaging a subject;
a connecting means for detachably connecting an external storage unit storing plural pieces of synthesization component image data that are different from each other;
a supplying means for supplying to an image synthesizing means the different pieces of synthesization component image data stored in the external storage unit connected to the connecting means; and
an image synthesizing means for synthesizing the image data of the subject imaged by the imaging means with the image data supplied through the supplying means.

12. The imaging device as defined in claim 11 including an image synthesizing device in which the external storage unit is a cassette.

13. The imaging device as defined in claim 11 including an image synthesizing device which comprises an image data converting means for converting a color tone of the synthesized image data output from the image data synthesizer to monochrome.

14. The imaging device as defined in claim 11 including an image syntehsizing device wherein the image synthesizing means comprises:
a first frame memory for storing the taken image data of a subject;
an image selecting means for successively selecting plural pieces of desired image data from plural pieces of synthesiaation component image data stored in the external storage unit;
an image data synthesizer for synthesizing the image data of the subject output from the first frame memory with the synthesization component image data selected by the image selecting means to successively output synthesized image data; and
a second frame memory for storing plural pieces of synthesized image data each for the respective synthesization component image which are obtained by synthesization by means of the image data synthesizer; and
said image synthesizing device printing a plurality of synthesized image data each for respective synthesization component images on one sheet, using the data stored in the second frame memory.

15. The imaging device as defined in claim 14 including an image synthesizing device in which the external storage unit is a cassette.

16. The imaging device as defined in claim 14 including an image synthesizing device which comprises an image data converting means for converting a color tone of the synthesized image data output from the image data synthesizer into monochrome.

17. The imaging device as defined in claim 11 including an image synthesizing device which comprises:
an instruction means through which a user gives an instruction to start imaging while conducting imaging by the imaging means;
a text displaying means for displaying a text communicating a shutter timing in response to an operation by the instruction means; and
a voice guiding means for outputting a voice in synchronization with the text displayed on the text displaying means.

18. An imaging device including an image synthesizing device which comprises:
an imaging means for imaging a subject;
a connecting means for detachably connecting an external storage unit storing plural pieces of synthesization component image data that are different from each other;
a selecting means for successively selecting and outputting the different pieces of synthesization component image data stored in the external storage unit connected to the connecting means;
an image synthesizing means for successively synthesizing the image data of the subject imaged by the imaging means with each of the different pieces of synthesization component image data selected by the selecting means; and
a printing means for printing plural different synthesized images on one sheet, based on plural different pieces of synthesized image data obtained by synthesization by means of the image synthesizing means.
